# EUROPÄISCHE PATENTANMELDUNG

(11) **EP 3 336 497 A1**
(43) Veröffentlichungstag der Anmeldung: **20.06.2018**
(21) Anmeldenummer: 16203700.6
(22) Anmeldetag: 13.12.2016
(51) Int. Cl.: G01J 5/02, G01J 5/04, G01J 5/00, F01D 17/08, F01D 5/18, F01D 21/00

(54) **GASTURBINENSCHAUFEL MIT INTEGRIERTER PYROMETERSONDE**

(71) Anmelder: Siemens Aktiengesellschaft, 80333 München (DE)
(72) Erfinder: Dahlke, Stefan, 45481 Mülheim a.d. Ruhr (DE); Ehrlich, Tom, 13187 Berlin (DE)

(57) **Zusammenfassung**

Diese Erfindung betrifft eine Gasturbinenschaufel (10), welche bei regulärer Benutzung eine Saugseite (11) wie auch eine Druckseite (12) hat, und welche weiterhin wenigstens eine innerlich angeordnete Kammer (15) aufweist, die dazu ausgebildet ist, bei regulärer Benutzung ein Kühlfluid (16) zu leiten, wobei in die wenigstens eine Kammer (15) eine Pyrometersonde (20) so integriert ist, dass ein Messabschnitt (21) der Pyrometersonde (20) an einer Öffnung (17) auf einer der beiden Seiten (11, 12) der Gasturbinenschaufel (10) angeordnet ist, so dass über die Öffnung (17) elektromagnetische Strahlung aus der Umgebung dem Messabschnitt (21) zuführbar ist.

## Beschreibung

Die vorliegende Erfindung betrifft eine Gasturbinenschaufel, welche bei regulärer Benutzung eine Saugseite wie auch eine Druckseite hat, und welche weiterhin eine wenigstens innerlich angeordnete Kammer aufweist, die dazu ausgebildet ist, bei regulärer Benutzung ein Kühlfluid zu leiten.

Um die Effizienz moderner Gasturbinen zu erhöhen, ist es erforderlich, das Temperaturverhalten einzelner Bauteile, insbesondere im Bereich des Heißgaspfades näher zu verstehen, damit die Betriebstemperatur soweit wie es technisch möglich ist, erhöht werden kann. Dieser Umstand trifft insbesondere auf Gasturbinenschaufeln zu, welche in der Entspannungsturbine angeordnet sind und mit Heißgas von einer Temperatur von bis zu 1600 °C beaufschlagt werden. Bei derartigen Temperaturen werden die Materialien der Bauteile bis hin zur thermischen Überlastungsgrenze beansprucht, wodurch die Lebensdauer zahlreicher Bauteile bei unsachgemäßer thermischer Beaufschlagung unerwünscht vermindert werden könnte.

Um die Wärmeverteilung auf und in derartigen Bauteilen bei regulärem Betrieb einer Gasturbine besser verstehen zu können, werden bspw. Pyrometer eingesetzt, die dazu ausgebildet sind, die Temperaturverhältnisse aus der thermischen Strahlung in ihrem Umfeld abzuleiten. Gerade auch die lokale Variation der Temperaturen in und auf einzelnen Bauteilen kann nähere Aussagen zu dem Betriebsverhalten der Bauteile ermöglichen und damit Anhaltspunkte für eine Effizienzsteigerung der Gasturbine liefern. So kann etwa mit einer Pyrometersonde eine Mehrzahl von Temperaturmesspunkten in der Umgebung aufgenommen werden, um daraus bspw. eine Temperaturverteilung abzuleiten. Pyrometer, welche im Heißgaspfad zur Temperaturmessung genutzt werden, sind etwa aus der DE 10 2011 077 908 A1 bekannt oder aus der WO 2012/175302 A1.

Der Stand der Technik lehrt hierbei mit Hilfe der Pyrometersonden, welche in den Heißgaspfad der Gasturbine eingebracht sind, einzelne Temperaturmesspunkte aufzunehmen, um diese dann etwa in einer Modellierung des gesamten Temperaturfeldes zu nutzen. Pyrometersonden eignen sich hierzu besonders gut, da diese berührungslos die Temperaturmessung ermöglichen. Nachteilig an diesen Pyrometersonden ist jedoch, dass diese selbst aufgrund der vorherrschenden Temperaturen starken thermischen Belastungen ausgesetzt sind und selber aktiv gekühlt werden müssen. Ebenso benötigen die Sonden einen Mindestdurchmesser, um die mechanische Integrität bei Betrieb der Gasturbine gewährleisten zu können, so dass auch bei längeren Meßperioden keine Schädigung der Pyrometersonde befürchtet werden muss.

Aufgrund der Abmessungen derartiger Pyrometersonden treten diese jedoch bei Einfügen in den Heißgaspfad der Gasturbine wiederum mit dem Strömungsfeld des Heißgases in Wechselwirkung und verursachen einen nur ungenau zu quantifizierenden Meßfehler des Temperaturfeldes. Ebenso verursachen sie eine Störung des Strömungsfeldes, was nicht nur zu einer fehlerhaften gemessenen Temperaturverteilung führen kann sondern auch mechanische Risiken hervorruft, wenn etwa aerodynamische Resonanzanregungen die Folge wären.

Soll also die Temperaturverteilung im Heißgaspfad der Gasturbine mithilfe einer Pyrometersonde näher bestimmt werden, so sollte die Sonde selbst zunächst keine signifikanten geometrischen Veränderungen des Messraumes selbst darstellen, um Fehler im Strömungsfeld sowie in der Temperaturverteilung weitgehend gering zu halten. Dies erfordert auch eine geringe Beeinflussung des aktiven Kühlsystems einzelner Bauteile der Gasturbine, welches dazu vorgesehen ist, die jeweiligen Bauteile gegen zu starke Temperatureinwirkung zu schützen. Auch eine merkliche Beeinflussung des Kühlsystems hätte wiederum eine Verfälschung der realen Temperaturverteilung in oder an den Bauteilen zur Folge. Im Grunde ist somit zu verlangen, dass die betreffende Pyrometersonde verhältnismäßig robust ist und nur eine geringe Störwechselwirkung mit dem zu messenden System aufweist.

Gerade diese Anforderungen können jedoch die aus dem Stand der Technik bekannten Lösungen nicht erfüllen. Insofern ist es erforderlich, eine Gasturbinenschaufel bzw. eine Gasturbine vorzuschlagen, welche genau diese technischen Nachteile aus dem Stand der Technik vermeiden kann. Insbesondere sind eine Gasturbinenschaufel und ein Gasturbine vorzuschlagen, die eine Pyrometermessung erlauben, die sehr geringe Störeinflüsse auf das real unter Betriebsbedingungen zu verstehende System ausübt.

Diese der Erfindung zugrundeliegende Aufgabe wird gelöst durch eine Gasturbinenschaufel gemäß Anspruch 1 sowie eine Gasturbine gemäß Anspruch 9.

Insbesondere werden die der Erfindung zugrundeliegenden Aufgaben gelöst durch eine Gasturbinenschaufel, welche bei regulärer Benutzung eine Saugseite wie auch eine Druckseite hat, und welche weiterhin wenigstens eine innerlich angeordnete Kammer aufweist, die dazu ausgebildet ist, bei regulärer Benutzung ein Kühlfluid zu leiten, wobei in die wenigstens eine Kammer eine Pyrometersonde so integriert ist, dass ein Messabschnitt der Pyrometersonde an einer Öffnung auf einer der beiden Seiten der Gasturbinenschaufel angeordnet ist, so dass über die Öffnung elektromagnetische Strahlung aus der Umgebung dem Messabschnitt zuführbar ist.

Weiterhin werden die der Erfindung zugrundeliegenden Aufgaben gelöst durch eine Gasturbine mit einer Gasturbinenschaufel wie vorab und auch nachfolgend beschrieben.

An dieser Stelle ist darauf hinzuweisen, dass eine reguläre Benutzung der Gasturbine bzw. der Gasturbinenschaufel eine Nutzung unter Verbrennung von Brennstoff betrifft, wie es etwa bei einer Gasturbine im Leistungsbetrieb der Fall ist. Eine derartige Gasturbinenschaufel kann bspw. in einer stationären Gasturbine zur Stromerzeugung aber auch in einem Gasturbinentriebwerk für ein Flugzeug angebracht sein.

Die Gasturbinenschaufeln werden typischerweise beim Leistungsbetrieb innerlich von einem Kühlfluid durchströmt, welches die Gasturbinenschaufel bei den hohen Betriebstemperaturen kühlt. Ebenfalls können in der Gasturbinenschaufel zudem kleine Öffnungen vorhanden sein, aus welchen dieses Kühlfluid austritt, um etwa auf der Oberfläche, insbesondere auf der Saugseite oder der Druckseite der Gasturbinenschaufel einen isolierenden Kühlfilm auszubilden. In anderen Worten wird die Gasturbinenschaufel typischerweise von einem Kühlfluid durchströmt, welches innerhalb und auf der Außenoberfläche der Gasturbinenschaufel so verteilt wird, dass die Gasturbinenschaufel selbst bei Betrieb unter den sehr hohen Temperaturbedingungen keinen Schaden nimmt.

Fernerhin ist darauf hinzuweisen, dass die vorliegende Gasturbinenschaufel typischerweise als Leitschaufel ausgebildet ist. Leitschaufeln sind gegenüber dem Gehäuse der Gasturbine stationär angebracht, so dass eine Pyrometersonde besonders einfach in solchen Gasturbinenschaufeln zu integrieren ist. Andererseits ist aber auch eine Integration in das drehende System des Rotors einer Gasturbine denkbar, so dass etwa auch eine Integration in eine Laufschaufel einer Gasturbine grundsätzlich möglich ist.

Weiterhin ist darauf hinzuweisen, dass der Messabschnitt der Pyrometersonde erlaubt, die aus der Umgebung aufgenommene Messstrahlung in die Sonde einzulassen, um sie dort nachzuweisen. Der Messabschnitt ist also im Wesentlichen die Detektoröffnung, über welche nachzuweisende Strahlung in die Pyrometersonde einstrahlen kann.

Erfindungsgemäß ist vorgesehen, eine Pyrometersonde in die Gasturbinenschaufel zu integrieren, wobei die Pyrometersonde über eine Öffnung auf einer der beiden Seiten der Gasturbinenschaufeln seine Messung vornehmen kann. Damit ist es etwa bei Integration der Pyrometersonde in eine Leitschaufel möglich, die jeweils benachbarten Leitschaufeln abzutasten und über einen gewissen Zeitraum bei regulärem Betrieb die Temperaturverteilung auf dieser jeweils benachbarten Leitschaufel zu erfassen. Da die Pyrometersonde in die Gasturbinenschaufel integriert ist, führt sie zu einer nur geringen aerodynamischen Störung des gesamten Strömungsfeldes im Messraum. Gleichermaßen ist die Pyrometersonde auch weitgehend thermisch von der Heißgasströmung entkoppelt, so dass eine nur verhältnismäßig geringe thermische Beeinflussung der Temperaturverteilung in dem Heißgaspfad die Folge ist. Fernerhin ist die Pyrometersonde aufgrund der mechanischen Integration in die Gasturbinenschaufel auch mechanisch geschützt, so dass die naturgemäß auftretenden Vibrationen und Erschütterungen in dem Messraum die Pyrometersonde weitgehend unbeeinflusst lassen.

Die Integration der Pyrometersonde in die Gasturbinenschaufel sorgt aber nicht nur für verhältnismäßig geringe aerodynamische, geometrische und thermische Beeinflussung des Messraums, sondern es werden auch Messbereiche erfassbar, die vorab nicht zugänglich waren. Ebenso wird die Messtechnik der Pyrometersonde selbst verhältnismäßig nur geringen mechanischen und thermischen Belastungen ausgesetzt, so dass die Messgenauigkeit verbessert werden kann. Fernerhin kann auch zur Kühlung der Pyrometersonde das Kühlfluid innerhalb der Gasturbinenschaufel genutzt werden, so dass eine besonders effiziente Nutzung des Kühlfluids möglich ist, damit gleichzeitig die Gasturbinenschaufel und die Pyrometersonde gekühlt werden können. Durch diese Einsparung an Kühlfluid kann wiederum der Wirkungsgrad der Gasturbine gesteigert werden.

Gemäß einer ersten vorteilhaften Ausführungsform der Gasturbinenschaufel ist vorgesehen, dass in der Kammer weiterhin ein Einsatz vorgesehen ist, welcher die Pyrometersonde wenigstens teilweise umgibt. Der Einsatz ist typischerweise als ein metallischer Einsatz ausgefertigt, der die Verteilung des Kühlfluid der Gasturbinenschaufel maßgeblich beeinflussenn kann. Um den hohen Betriebstemperaturen zu widerstehen, wird der Einsatz meist aus einem Hochtemperatur-beständigen Metall gefertigt, wobei typische Fertigungsverfahren aus dem Stand der Technik bekannt sind. Der Einsatz selbst sorgt für eine geeignete Verteilung des Kühlfluids innerhalb der Kammer der Gasturbinenschaufel, so dass auch die Pyrometersonde auf ihrer Oberfläche ausreichend mit Kühlfluid versorgt werden kann. Der Einsatz ist hierbei insbesondere nicht dazu vorgesehen, die Pyrometersonde zu haltern, da dies in Folge zu thermischen Hotspots führen würde, die wiederum eine Beschädigung der Pyrometersonde zur Folge hätten.

Entsprechend einer Weiterführung kann der Einsatz auch Kühlfluidbohrungen aufweisen, durch welche Kühlfluid aus dem Inneren der Kammer an die Oberfläche der Pyrometersonde geführt wird. Derartige Kühlfluidbohrungen erlauben also eine gezielte Versorgung der Oberfläche der Pyrometersonde mit Kühlfluid und versorgt die Pyrometersonde damit mit ausreichend Kühlleistung für den Betrieb bei den typischerweise vorherrschenden hohen Temperaturen.

Als Alternative oder auch in Weiterführung dieser Ausführungsform kann der Einsatz strömungsführende Elemente aufweisen, durch welche Kühlfluid aus dem Inneren der Kammer in die Öffnung einströmbar ist. Die Öffnung an der Saug- bzw. Druckseite der Gasturbinenschaufel ermöglicht das Eindringen von Heißgas und damit die Beaufschlagung der Pyrometersonde mit hoher Wärmeleistung auf einem hohen Temperaturniveau. Dies wiederum kann zur Schädigung der Pyrometersonde führen, so dass durch gezielte strömungstechnische Führung des Kühlfluids und Einströmen in die Öffnung der Gasturbinenschaufeln dieser thermischen Beaufschlagung mit Heißgas entgegengewirkt werden kann. In anderen Worten kann der Messabschnitt der Pyrometersonde soweit mit Kühlfluid gespült werden, dass die Beaufschlagung mit Heißgas deutlich verringert oder sogar vermieden werden kann.

Fernerhin ist es denkbar, dass der Einsatz wenigstens bereichsweise eine Wärmedämmschicht aufweist, welche insbesondere dort angebracht ist, wo der Einsatz sich mit der Öffnung überdeckt. Derartige Wärmedämmschichten, welche etwa als oxidische Dämmschicht oder keramische Dämmschicht ausgebildet sein kann, vermindert damit die Beaufschlagung der stärker Temperatur-empfindlichen Teile des Einsatzes mit Heißgas. Gerade im Bereich der Öffnung der Saugseite bzw. der Druckseite der Gasturbinenschaufel kann der Beaufschlagung des Einsatzes mit Heißgas gut entgegengewirkt werden. Eine bereichsweise Beschichtung des Einsatzes mit einem Wärmedämmmaterial hat darüber hinaus aufgrund der hohen Kosten der Anbringung derartiger Wärmedämmschichten den Vorteil, dass die Gesamtkosten verhältnismäßig gering gehalten werden können.

Entsprechend einer bevorzugten Ausführungsform der Erfindung ist vorgesehen, dass die Öffnung als Schlitz in der Saugseite oder der Druckseite ausgeführt ist, wobei die Längserstreckungsrichtung des Schlitzes senkrecht zur Strömungsrichtung eines Arbeitsfluids bei regulärem Betrieb der Gasturbinenschaufel verläuft. In anderen Worten verläuft die Längserstreckungsrichtung des Schlitzes in der Saugseite oder der Druckseite ohne dass hierbei der Schlitz einer Krümmung der Schaufelseite folgt. Vielmehr verläuft der Schlitz also weitgehend ungekrümmt vom Kopfende bis zum Fuß der Gasturbinenschaufel. Der Schlitz weißt hierbei eine größere Längserstreckung auf als Breitenerstreckung. Aufgrund dieser geometrischen Anordnung kann über die Gesamtlänge einer Gasturbinenschaufel die Temperaturverteilung erfasst werden. Zudem ermöglicht ein Schlitz eine weitgehend einfache und komplikationslose Einstellung des Messabschnitts relativ zu den zu erfassenden Bauteilen in der Messumgebung. Bei einem Schlitz ist es nämlich lediglich erforderlich, die Pyrometersonde in die Schaufel einzufahren, und den Ort des Messabschnittes je nach Verfahrweg festzulegen. Zudem kann ein Schlitz auch durch geeignet umgelenktes Kühlfluid aus der Kammer der Gasturbinenschaufel weitgehend gut gegen das Eindringen von Heißgas geschützt werden.

Entsprechend einer Weiterführung dieser Ausführungsform ist vorgesehen, dass die Breite des Schlitzes geringer ist, als die korrespondierende Breitenausdehnung der Pyrometersonde. Die Breitenausdehnung verläuft hierbei senkrecht zur Längserstreckung des Schlitzes. Weiterhin ist bevorzugt, dass die Breitenausdehnung weitgehend gleichmäßig und nicht mehr als um 2 % der Gesamtbreite variiert. Derartige Schlitze mit einer weitgehend konstanten Breite können in die Gasturbinenschaufel leicht eingebracht werden, wobei die Pyrometersonde im Inneren der Gasturbinenschaufel bei entsprechender Ausrichtung zum Schlitz diesen von innen gegen das Eindringen von Heißgas verhältnismäßig gut abschließen kann. In anderen Worten verdeckt also die Pyrometersonde von innen den Schlitz wenigstens bereichsweise durch eine geeignete Überdeckung.

Entsprechend einer weiteren vorteilhaften Ausführungsform der Erfindung ist vorgesehen, dass die Pyrometersonde als eine in einem Metallrohr aufgenommene optische Vorrichtung ausgebildet ist, wobei das Metallrohr eine zylindrische Geometrie aufweist. Die Längserstreckungsrichtung dieser zylindrischen Geometrie verläuft dabei bevorzugt parallel zur Längserstreckungsrichtung der insbesondere als Schlitz ausgeformten Öffnung. Ein Metallrohr lässt sich darüber hinaus auch weitgehend robust handhaben, so dass die Pyrometersonde in der Gasturbinenschaufel schadensfrei bewegt werden kann. Das Metallrohr selbst wiederum schützt die optische Vorrichtung der Pyrometersonde gegen zu starke thermische Einflüsse und kann besonders gut mittels Kühlfluid thermisch konditioniert werden. Gerade bei den sehr hohen vorherrschenden Heißgastemperaturen ist dies sehr vorteilhaft.

Entsprechend einer Weiterführung der vorab wie auch nachfolgend beschriebenen Gasturbine mit Gasturbinenschaufel ist vorgesehen, dass die Pyrometersonde mittels einer an dem äußeren Gehäuse der Gasturbine angebrachten Halterung ortsgenau gehaltert ist und mittels der Halterung senkrecht zur Strömungsrichtung eines Arbeitsfluids auf der Saugseite oder der Druckseite bei regulärem Betrieb der Gasturbinenschaufel bewegt werden kann, als auch drehend bewegt werden kann. Die Drehachse ist hierbei bevorzugt parallel zur Längserstreckungsachse der Pyrometersonde. Die Halterung erlaubt darüber hinaus die gezielte Einstellung des Messabschnittes der Pyrometersonde in der Gasturbinenschaufel, so dass bei Kenntnis des Ortes des Messabschnittes das Messfeld der Pyrometersonde leicht bestimmt werden kann. Die Halterung ermöglicht insbesondere eine Längsverschiebung der Pyrometersonde innerhalb der Gasturbinenschaufel, so dass die Pyrometersonden vom Kopfende zum Fußende der Gasturbinenschaufel bzw. umgekehrt verfahren werden kann. Gleichzeitig kann die Pyrometersonde um diese Verfahrrichtung im Sinne einer Drehachse die Pyrometersonde geschwenkt werden. Dadurch kann das Messfeld eingestellt und infolge dessen die Messpunkte gezielt ausgewählt werden.

Eine ortsgenaue Halterung ist gegeben, wenn die Halterung der Pyrometersonde sowohl hinsichtlich ihres Verfahrweges (=Längsverschiebung) in die Gasturbinenschaufel als auch hinsichtlich einer möglichen Drehung in derselben unveränderlich gegeben ist. Dies schließt jedoch nicht aus, dass die Pyrometersonde in der Halterung geringe Schwingungen und Vibrationen ausführt.

In Weiterführung dieser Idee kann vorgesehen sein, dass die Pyrometersonde durch die Halterung derart gehaltert wird, dass die Oberfläche der Pyrometersonde weder mit der Oberfläche der Kammer noch mit der Oberfläche des Einsatzes in Kontakt ist. Die Halterung erlaubt also eine derart ortsgenaue Halterung, dass die Ausbildung von thermischen Hotspots zwischen der Oberfläche der Pyrometersonde und der Oberfläche der Gasturbinenschaufel bzw. des Einsatzes nicht erfolgt. Vielmehr kann die Pyrometersonde an einem Ort fixiert werden, welcher das Beaufschlagen der Oberfläche der Pyrometersonde mit Kühlfluid in der Kammer besonders vorteilhaft erlaubt. In anderen Worten ist somit eine thermisch sichere und lebensdauerverlängernde Halterung der Pyrometersonde möglich.

Nachfolgend soll die Erfindung anhand einzelner Beispiele im Detail näher beschrieben werden. Hierbei ist darauf hinzuweisen, dass die nachfolgenden Figuren lediglich schematisch zu verstehen sind, und insbesondere keine Einschränkung hinsichtlich der Ausführbarkeit andeuten können.

Weiterhin ist darauf hinzuweisen, dass nachfolgend alle identischen Bezugszeichen sich auf Bauteile beziehen, welche gleiche technische Wirkung aufweisen.

Ebenso soll darauf hingewiesen werden, dass nachfolgend die einzelnen technischen Merkmale in beliebiger Kombination miteinander bzw. in Kombination mit den vorab beschriebenen Ausführungsformen der Erfindung beansprucht werden sollen, soweit die sich daraus ergebende Kombination zur Lösung der der Erfindung zugrundeliegenden Aufgabe führt. Hierbei zeigen:
- Figur 1: eine seitliche perspektivische Ansicht auf eine Ausführungsform der Gasturbinenschaufel gemäß der Erfindung;
- Figur 2: eine perspektivische Ansicht auf eine Kammer einer weiteren Ausführungsform der Gasturbinenschaufel, mit integriertem Einsatz;
- Figur 3: eine Ausführungsform eines Einsatzes, wie er etwa in eine Kammer gemäß der Ausführungsform der Figur 2 in eine Gasturbinenschaufel eingesetzt werden kann;
- Figur 4: eine schematische Ansicht einer Ausführungsform einer erfindungsgemäßen Gasturbine, zur Verdeutlichung der Halterung der Pyrometersonde an der Außenseite der Gasturbine.

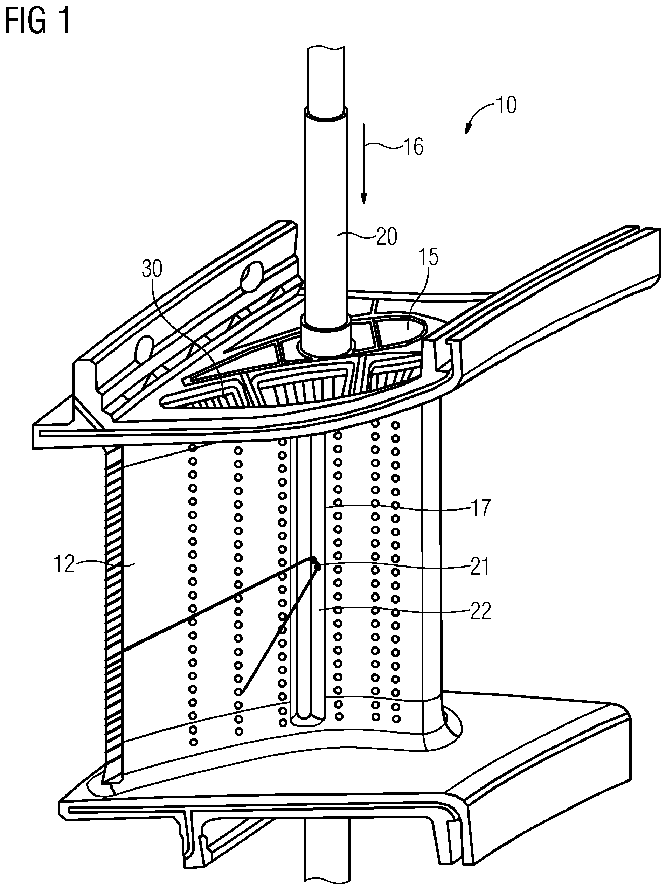

Figur 1 zeigt eine perspektivische Ansicht auf eine Ausführungsform einer erfindungsgemäßen Gasturbinenschaufel 10, welche mit der Druckseite 12 zum Betrachter hin orientiert ist. Die Saugseite 11 befindet sich auf der gegenüberliegenden Seite der Gasturbinenschaufel 10 und ist vorliegend nicht zu sehen. Die Gasturbinenschaufel 10 ist als Leitschaufel ausgebildet, welche einen in der Darstellung oberen Befestigungsbereich, den Kopf, aufweist, wie auch einen unteren Befestigungsbereich, den Fuß, (nicht mit Bezugszeichen versehen). Beide Befestigungsbereiche können am inneren Gehäuse der Gasturbine befestigt werden. Bei regulärem Betrieb der Gasturbine strömt Heißgas die Gasturbinenschaufel 10 an, wobei die Gasturbinenschaufel 10 selbst zu einer Strömungsumlenkung dieses Heißgases beiträgt.

Um nun die Temperaturverteilung in der unmittelbaren Nähe der Gasturbinenschaufel 10 erfassen zu können, weist die vorliegende Ausführungsform der Gasturbinenschaufel 10 eine integrierte Pyrometersonde 20 auf, die in einer Kammer 15 angeordnet ist. Die Kammer 15 selbst weist darüber einen Einsatz 30 auf, der eine derartige Geometrie hat, so dass die Pyrometersonde 20 ohne Einschränkung innerhalb der Kammer 15 verschoben werden kann. Der Einsatz 30 dient also nicht der Halterung der Pyrometersonde 20 sondern lediglich der Strömungskonditionierung des Kühlfluids 16, welches typischerweise von oben nach unten in die Kammer 15 einströmt. Aufgrund der Strömungskonditionierung des Einsatzes 30 kommt es zu einer Beaufschlagung der Oberfläche 22 der Pyrometersonde mit Kühlfluid 16, so dass bei regulärem Betrieb der Gasturbine die Oberfläche thermisch isolierend geschützt ist. Insbesondere betrifft diese isolierende Wirkung durch das Kühlfluid den Messabschnitt 21 der Pyrometersonde 20, über welchen die thermische Strahlung aus der Umgebung aufgenommen werden kann.

Ausführungsgemäß ist die Öffnung 17 vorliegend als Schlitz ausgeführt, welcher sich senkrecht zwischen dem Befestigungsabschnitt am Kopfende wie auch dem Befestigungsabschnitt am Fußende der Gasturbinenschaufel 10 in Längserstreckung ausdehnt. Die Pyrometersonde 20, welche als Metallzylinder ausgebildet ist, und in welchen die Messoptik integriert ist, verdeckt hierbei von innen den Schlitz, also die Öffnung 17, so dass Heißgas nicht ungehindert in den Schlitz 17 einströmen kann. Zudem sorgt die Umlenkung des Kühlfluids 16 soweit für eine Isolierung bzw. eine Gegenströmung im Bereich der Öffnung 17, dass die thermische Beaufschlagung der Pyrometersonde 20 durch das Heißgas weitgehend problemlos vorgenommen werden kann.

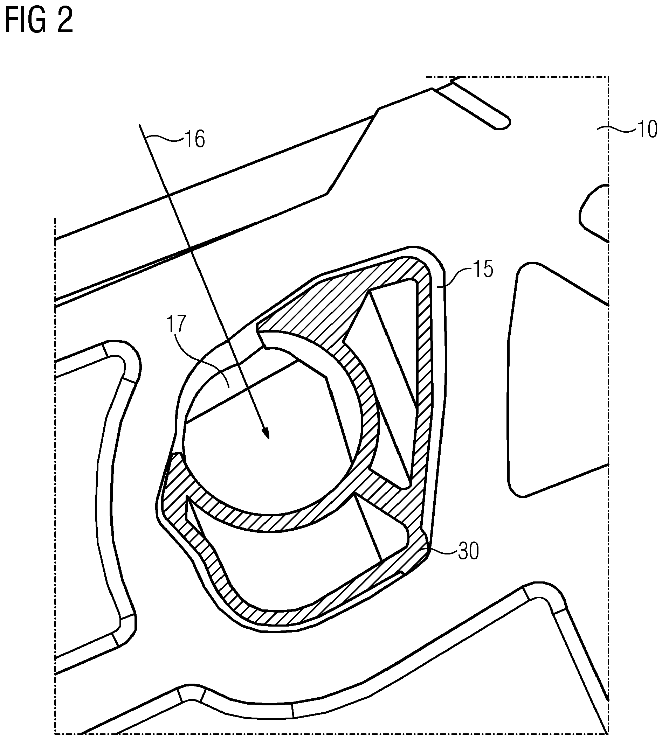

Um die Integration des Einsatzes 30 in die Kammer 15 der Gasturbinenschaufel 10 besser zu erläutern, ist gemäß Figur 2 eine perspektivische Ansicht auf eine weitere Ausführungsform einer erfindungsgemäßen Gasturbinenschaufel 10 gezeigt, bei welcher der Einsatz 30 bereits vollständig in die Kammer 15 integriert ist. Der Einsatz 30 weist eine kreisförmige Aussparung auf, in welche die Pyrometersonde 20 eingeführt werden kann. Bei entsprechender Verstellung der Position der Pyrometersonde 20 bzw. des Messabschnittes 21 kann durch Messung der thermischen Umgebungsstrahlung durch die Öffnung 17 die Temperaturverteilung in der Umgebung erfasst werden. Um die Oberfläche 22 der Pyrometersonde 20 geeignet zu kühlen, wird die Kammer 15 selbst mit Kühlfluid 16 beschickt, welches durch den Einsatz 30 derart strömungstechnisch umgeleitet wird, dass die Oberfläche 22 ausreichend gekühlt wird.

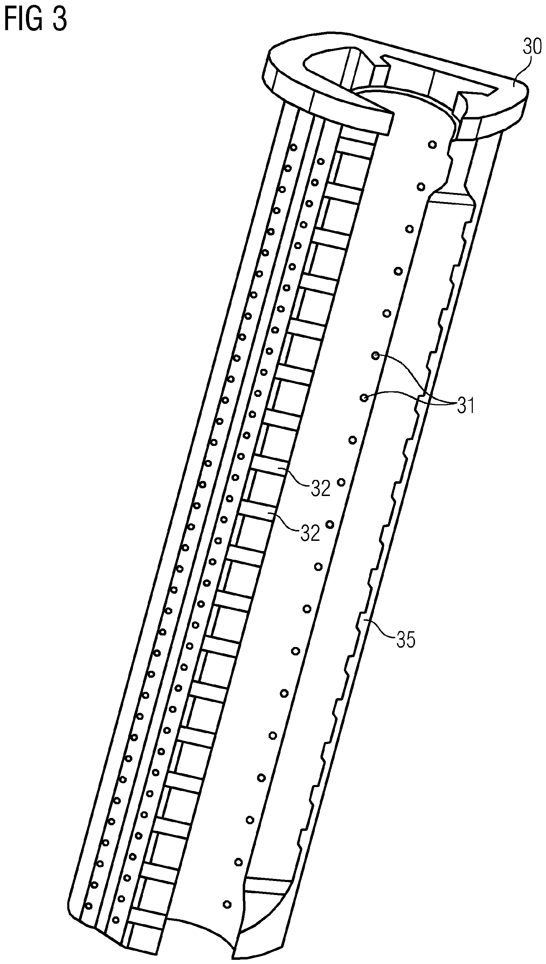

Figur 3 zeigt eine Ausführungsform eines solchen Einsatzes 30, wie er etwa in der Ausführungsform gemäß Figur 2 der Gasturbinenschaufel 10 vorgesehen sein kann. Der Einsatz 30 ist hierbei als metallisches Bauteil vorgesehen, welches aus einem hochtemperaturbeständigen Material gefertigt ist. Der Einsatz 30 weist darüber hinaus Kühlfluidbohrungen 31 auf, über welche das in die Kammer 15 einfließende Kühlfluid 16 wenigstens zum Teil umgeleitet und auf die Oberfläche 22 der Pyrometersonde 20 gelenkt werden kann. Diese Maßnahme dient in erster Linie der thermischen Konditionierung der Oberfläche 22 der Pyrometersonde 20.

Um jedoch die Gasturbinenschaufel 10 gegen ein Eintreten von Heißgas in die Öffnung 17 zu schützen, weist der Einsatz 30 darüber hinaus strömungsführende Elemente 32 auf, welche die Kühlfluidströmung in Richtung der Öffnung 17 gezielt umleitet. Insofern wird dem von außen eintretenden Heißgasstrom ein von innen nach außen austretender Kühlfluidstrom entgegengesetzt, der praktisch als isolierendes Sperrfluid das Eindringen von Heißgas in die Gasturbinenschaufel 10 weitgehend verhindern kann. Sollte es jedoch dennoch zu einer starken Beaufschlagung der Gasturbinenschaufel im Bereich der Öffnung 17 mit Heißgas kommen, kann die thermische Auswirkung dieser Heißgasbeaufschlagung auf der Oberfläche des Einsatzes 30 durch eine Wärmedämmschicht 35 verhindert werden. Die Wärmedämmschicht 35 ist vorliegend auf einer im Bereich der Öffnung 17 angeordneten Kante angebracht und schützt somit die Pyrometersonde 20, welche in den Einsatz 30 eingeschoben ist.

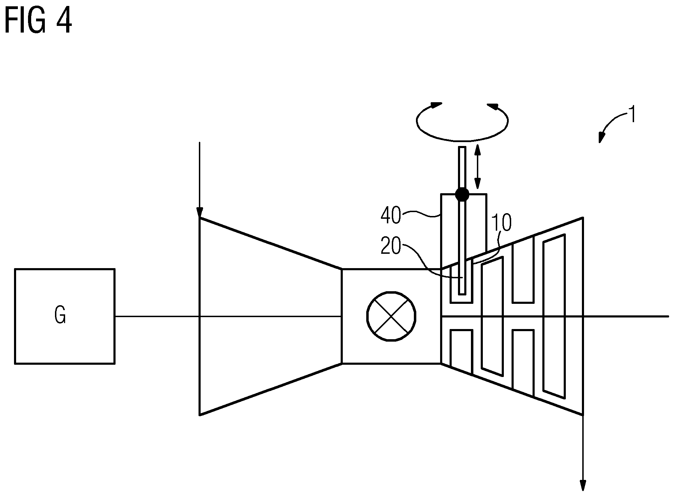

Figur 4 zeigt eine schematische Darstellung einer Ausführungsform einer erfindungsgemäßen Gasturbine 1, welche im Bereich der Entspannungsturbine eine Halterung 40 aufweist, die am Außengehäuse der Gasturbine angebracht ist. Diese Halterung 40 erlaubt eine ortsgenaue Halterung der Pyrometersonde 20, so dass die Pyrometersonde sowohl in die jeweilige Gasturbinenschaufel in Richtung des Rotors eingeführt bzw. in entgegengesetzter Richtung wieder entfernt werden kann, und erlaubt zudem eine Drehung der Pyrometersonde 20 und infolge eine Justierung des Messefeldes des Messabschnitts 21. Die beiden durch die Halterung 40 ermöglichten Bewegungsrichtungen sind durch entsprechende Doppelpfeile an der Halterung 40 bzw. der Pyrometersonde 20 angedeutet.

Weitere Ausführungsformen ergeben sich aus den Unteransprüchen.

## Patentansprüche

1. Gasturbinenschaufel (10), welche bei regulärer Benutzung eine Saugseite (11) wie auch eine Druckseite (12) hat, und welche weiterhin wenigstens eine innerlich angeordnete Kammer (15) aufweist, die dazu ausgebildet ist, bei regulärer Benutzung ein Kühlfluid (16) zu leiten,
**dadurch gekennzeichnet, das s** in die wenigstens eine Kammer (15) eine Pyrometersonde (20) so integriert ist, dass ein Messabschnitt (21) der Pyrometersonde (20) an einer Öffnung (17) auf einer der beiden Seiten (11, 12) der Gasturbinenschaufel (10) angeordnet ist, so dass über die Öffnung (17) elektromagnetische Strahlung aus der Umgebung dem Messabschnitt (21) zuführbar ist.

2. Gasturbinenschaufel nach Anspruch 1,
**dadurch gekennzeichnet, dass** in der Kammer (15) weiterhin ein Einsatz (30) vorgesehen ist, welcher die Pyrometersonde (20) wenigstens teilweise umgibt.

3. Gasturbinenschaufel nach Anspruch 2,
**dadurch gekennzeichnet, dass** der Einsatz (30) Kühlfluidbohrungen (31) aufweist, durch welche Kühlfluid aus dem Inneren der Kammer (15) an die Oberfläche (22) der Pyrometersonde (20) geführt wird.

4. Gasturbinenschaufel nach einem der Ansprüche 2 oder 3,
**dadurch gekennzeichnet, dass** der Einsatz (30) strömungsführende Elemente (32) aufweist, durch welche Kühlfluid aus dem Inneren der Kammer (15) in die Öffnung (17) einströmbar ist.

5. Gasturbinenschaufel nach einem der Ansprüche 2 bis 4,
**dadurch gekennzeichnet, dass** der Einsatz (30) wenigstens bereichsweise eine Wärmedämmschicht (35) aufweist, welche insbesondere dort angebracht ist, wo der Einsatz (30) sich mit der Öffnung (17) überdeckt.

6. Gasturbinenschaufel nach einem der vorhergehenden Ansprüche,
**dadurch gekennzeichnet, dass** die Öffnung (17) als Schlitz in der Saugseite (11) oder der Druckseite (12) ausgeführt ist, wobei die Längserstreckungsrichtung des Schlitzes senkrecht zur Strömungsrichtung eines Arbeitsfluids bei regulärem Betrieb der Gasturbinenschaufel (10) verläuft.

7. Gasturbinenschaufel nach Anspruch 6,
**dadurch gekennzeichnet, dass** die Breite des Schlitzes geringer ist, als die korrespondierende Breitenausdehnung der Pyrometersonde (20).

8. Gasturbinenschaufel nach einem der vorhergehenden Ansprüche,
**dadurch gekennzeichnet, dass** die Pyrometersonde (20) als eine in einem Metallrohr aufgenommene optische Vorrichtung ausgebildet ist, wobei das Metallrohr eine zylindrische Geometrie aufweist.

9. Gasturbine (1) mit einer Gasturbinenschaufel (10) nach einem der vorhergehenden Ansprüche.

10. Gasturbine nach Anspruch 9,
**dadurch gekennzeichnet, dass** die Pyrometersonde (20) mittels einer an dem äußeren Gehäuse der Gasturbine (1) angebrachten Halterung (40) ortsgenau gehaltert ist und mittels der Halterung (40) sowohl senkrecht zur Strömungsrichtung eines Arbeitsfluids auf der Saugseite (11) oder der Druckseite (12) bei regulärem Betrieb der Gasturbinenschaufel (10) bewegt werden kann, als auch drehend bewegt werden kann.

11. Gasturbine nach einem der Ansprüche 9 oder 10,
**dadurch gekennzeichnet, dass** die Pyrometersonde (20) durch die Halterung (40) derart gehaltert wird, dass die Oberfläche der Pyrometersonde (20) weder mit der Oberfläche der Kammer (15) noch mit der Oberfläche des Einsatzes (30) in Kontakt ist.
